# EUROPEAN PATENT APPLICATION

(11) **EP 1 909 036 A2**
(43) Date of publication of application: **09.04.2008**
(21) Application number: 07116862.9
(22) Date of filing: 20.09.2007
(51) Int. Cl.: F24C 15/16, A47B 47/02, B23K 33/00, F16B 17/00

(54) **Supporting structure**

(30) Priority: 03.10.2006 IT MO20060309
(71) Applicant: ANGELO PO GRANDI CUCINE S.p.A., 41012 Carpi (MO) (IT)
(72) Inventor: Bassoli, Claudio, 41012, Carpi (MO) (IT)
(74) Representative: Crugnola, Pietro

(57) **Abstract**

A supporting structure (1) for supporting receptacles (2) for foods in apparatuses (4) for thermally treating said foods comprises crosspiece means (5) such as to act as a guide for said receptacles (2), upright means (7, 8) for supporting said crosspiece means (5) and welding joint means (11) for fixing an end portion (9, 10) of said crosspiece means (5) to a further portion (12, 13) of said upright means (7, 8); said end portion (9, 10) and said further portion (12, 13) are substantially coplanar and said welding joint means (11) extends along a profile (14) having at least a concavity (15).

## Description

The invention relates to a supporting structure for supporting receptacles for foods, such as trays, grills or the like.

In particular, the invention refers to a fixed or extractable supporting structure arranged for being positioned in apparatuses for thermally treating foods, such as, for example, refrigerators, ovens, chillers, or the like.

Supporting structures are known comprising a plurality of crosspieces that are mutually opposite and are provided with folded edges for acting as guides and supports for the aforesaid receptacles.

In this way, each pair of opposite crosspieces defines a supporting plane for one of the receptacles, which can thus be positioned on top of one another.

These supporting structures further comprise two pairs of mutually opposite uprights, on which the crosspieces are fixed by means of spot welding.

A drawback of the aforesaid supporting structures is that they are difficult to clean, in particular at welding zones defined between the crosspieces and the uprights.

In fact, these welding zones comprise interstices in which residues of food, dirt and still other matter can accumulate.

In particular, the residues of food make bacteria proliferate if the supporting structure is inserted into an apparatus for cold treatment of foods, for example into a refrigerator, or may burn and adhere to the supporting structure if the latter is inserted into an apparatus for heat treating, i.e. cooking, the foods.

Further, the food residues deposited near the aforesaid interstices contribute to weakening the welding zones, which are stressed both because of the serious temperature excursions to which the welding zones are subjected in the aforesaid apparatuses and because of the mechanical stress due to the weight of the receptacles.

In the most serious cases this can cause the detachment of the crosspieces from the uprights.

A further drawback is that these supporting structures are difficult and laborious to assemble.

In fact, it is above all necessary to position the crosspieces correctly on the respective uprights and then spot-weld the crosspieces manually to the latter.

An object of the invention is to improve the supporting structures for supporting receptacles for food in apparatuses for thermally treating such foods.

A further object is to provide supporting structures that are easy to clean.

A still further object is to obtain supporting structures that can be assembled in a simple and fast manner.

According to the invention, a supporting structure is provided for supporting receptacles for foods in apparatuses for thermally treating said foods, comprising crosspiece means such as to act as a guide for said receptacles, upright means for supporting said crosspiece means and welding joint means for fixing an end portion of said crosspiece means to a further portion of said upright means, characterised in that said end portion and said further portion are substantially coplanar and said welding joint means extends along a profile having at least a concavity.

In an embodiment of the invention, the crosspiece means is provided with opposite ends having a substantially V-shaped profile and being arranged for being coupled and subsequently welded, for example by means of head laser welding, to corresponding recesses also having a V-shaped profile with which the upright means is provided.

This enables supporting structures to be obtained that are easy to clean.

In fact, between the crosspiece means and the upright means welding zones are defined that are substantially flat and devoid of interstices.

This further makes it easier and fast to assemble the supporting structure, inasmuch as the V-shaped profiles of the ends are self-centring in the respective V-shaped profiles of the recesses and the head laser welding can be performed in an automated manner.

In this way, further, the V-shaped profile of the welding joint means is contained in the upright means, which enables the resistance of the supporting structure to both thermal and mechanical stress to be increased compared with known structures.

The invention can be better understood and implemented with reference to the attached drawings that illustrate some embodiments thereof by way of non-limiting example, in which:
Figure 1 is a schematic front view of a supporting structure inserted into an apparatus for thermally treating foods;
Figure 2 is a schematic and fragmentary side view of a part of the supporting structure in Figure 1;
Figure 3 is an enlarged and fragmentary side view of a first embodiment of welding joint means included in the supporting structure in Figure 1;
Figure 4 is an enlarged and fragmentary side view of a second embodiment of welding joint means included in the supporting structure in Figure 1;
Figure 5 is an enlarged and fragmentary side view of a third embodiment of welding joint means included in the supporting structure in Figure 1;
Figure 6 is an enlarged and fragmentary side view of a fourth embodiment of welding joint means included in the supporting structure in Figure 1;
Figure 7 is an enlarged and fragmentary side view of a fifth embodiment of welding joint means included in the supporting structure in Figure 1;
Figure 8 is an enlarged and fragmentary side view of a sixth embodiment of welding joint means included in the supporting structure in Figure 1.

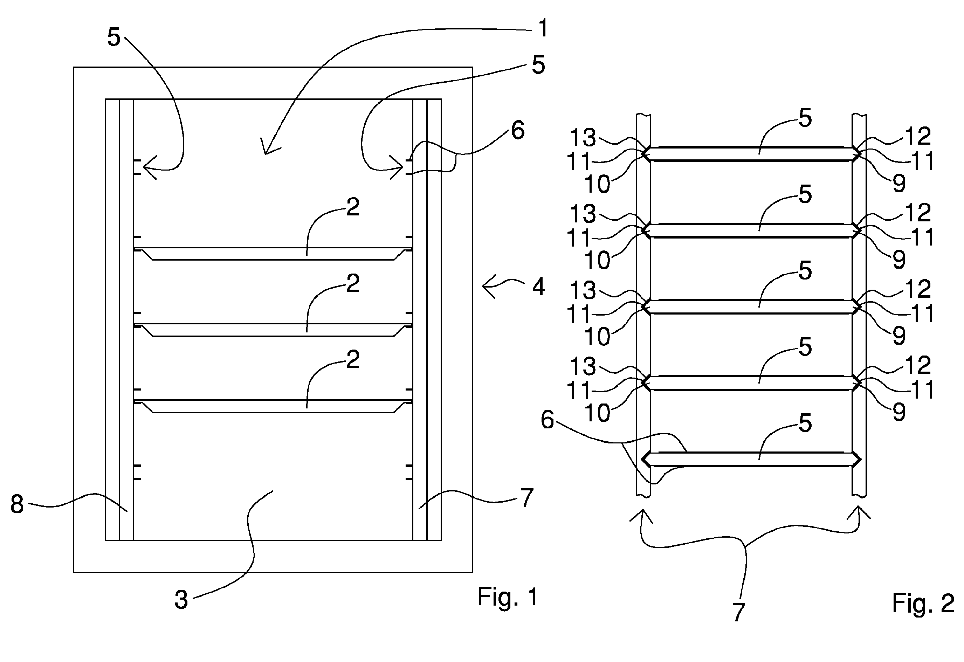

With reference to Figures 1 and 2, there is shown a supporting structure 1 arranged for supporting receptacles 2 for foods, such as trays, grills or the like.

The supporting structure 1 is arranged for being positioned in a space 3 obtained in an apparatus 4 for thermally treating foods, for example a refrigerator, an oven, a chiller or the like.

The supporting structure 1 comprises a plurality of crosspieces 5 that are mutually opposite and provided with folded edges 6, for example C-shaped, arranged for acting as guides and supports for the receptacles 2.

In other words, each pair of opposite crosspieces 5 defines a supporting plane for one of the receptacles 2, which can thus be positioned one above the other.

The supporting structure 1 further comprises a first pair of uprights 7 (Figure 2) and a mutually opposite second pair of uprights 8, each arranged for supporting a plurality of crosspieces 5, positioned above one another.

The first pair of uprights 7 and the second pair of uprights 8 each comprise a plurality of first portions 12 and of second portions 13 that are mutually opposite, arranged respectively for coupling with a first end portion 9 and a second end portion 10 of each crosspiece 5, the first end portion 9 and the second end portion 10 being mutually opposite.

The supporting structure 1 further comprises welding joint means 11 for fixing each first end portion 9 and second end portion 10 of a crosspiece 5 respectively to a first portion 12 and to a second portion 13.

In particular, the welding joint means 11 is arranged for welding the first end portion 9 and the second end portion 10 to a first portion 12 and to a second portion 13 in such a way that the latter are substantially coplanar respectively with the first end portion 9 and with the second end portion 10.

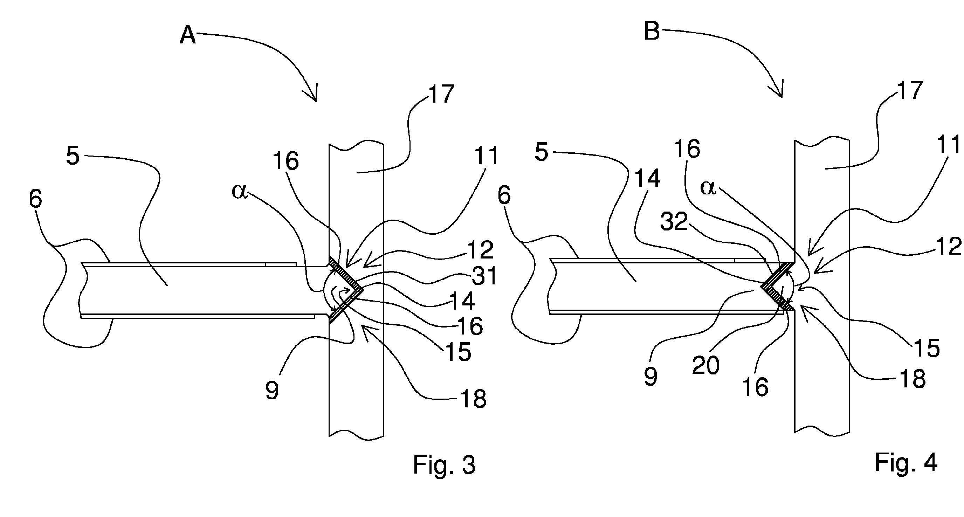

Further, as shown in Figures 3 to 8, the welding joint means 11 extends along a profile 14 comprising at least a concavity 15 and can be made by laser head welding, TIG (Tungsten Inert Gas) welding or the like.

In Figure 3 there is shown a welding zone 18 defined between a first end portion 9 of a crosspiece 5 and a first portion 12 of an upright 17 of the first pair of uprights 7.

In particular, in Figure 3 there is shown a first embodiment A of the welding joint means 11 in which the concavity 15 of the profile 14 is defined by rectilinear parts 16.

In the first embodiment A the rectilinear parts 16 define a V-shaped profile contained in the upright 17 and comprising a vertex angle α substantially equal to 90°.

In other words, in the first embodiment A the first end portion 9 and the second end portion 10 are V-shaped and are arranged for being inserted into respective first seats 31, which are also V-shaped and obtained in the first portions 12 and in the second portions 13.

In an embodiment that is not shown the vertex angle α is greater than or equal to 20°.

In a further embodiment that is not shown the vertex angle α is less than 90°.

In Figure 4 there is shown a second embodiment B of the welding joint means 11 in which the rectilinear parts 16 define a V-shaped profile contained in the crosspiece 5 and comprising a vertex angle α substantially equal to 90°.

In other words, in the second embodiment B the first portions 12 and the second portions 13 comprise first V-shaped ridges 20 arranged for being inserted into second seats 32, which are also V-shaped and obtained in the first end portion 9 and in the second end portion 10.

In an embodiment that is not shown the vertex angle α is greater than or equal to 20°.

In a further embodiment that is not shown the vertex angle α is less than 90°.

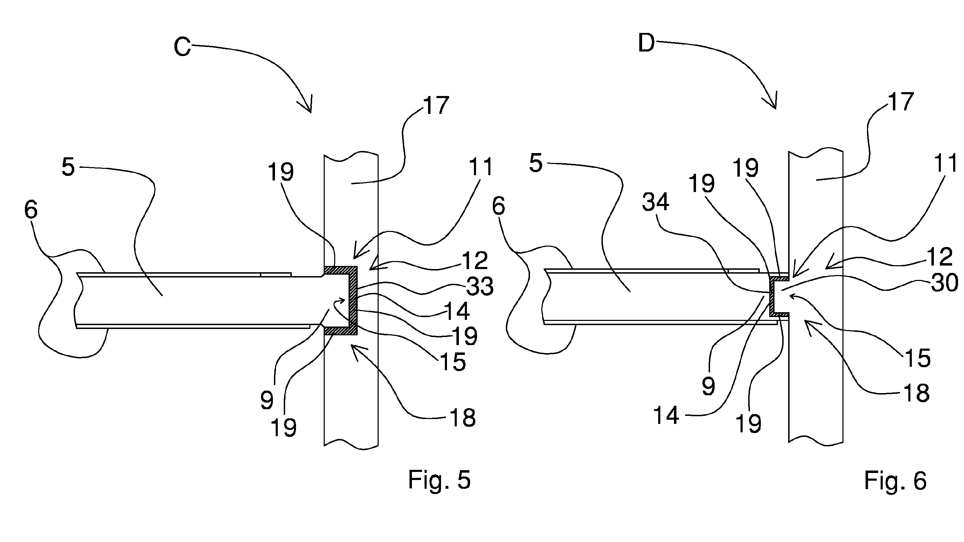

In Figure 5 there is shown a third embodiment C of the welding joint means 11 in which the concavity 15 of the profile 14 is defined by further rectilinear parts 19.

In the third embodiment C the further rectilinear parts 19 define a C-shaped profile contained in the upright 17.

In other words, in the third embodiment C the first end portion 9 and the second end portion 10 are C-shaped and are arranged for being inserted into respective third seats 33, which are also C-shaped and obtained in the first portions 12 and in the second portions 13.

In Figure 6 there is shown a fourth embodiment D of the welding joint means 11 in which the further rectilinear parts 19 define a C-shaped profile contained in the crosspiece 5.

In other words, in the fourth embodiment D the first portions 12 and the second portions 13 comprise second C-shaped ridges 30 arranged to be inserted into fourth seats 34, which are also C-shaped, and are received in the first end portion 9 and in the second end portion 10.

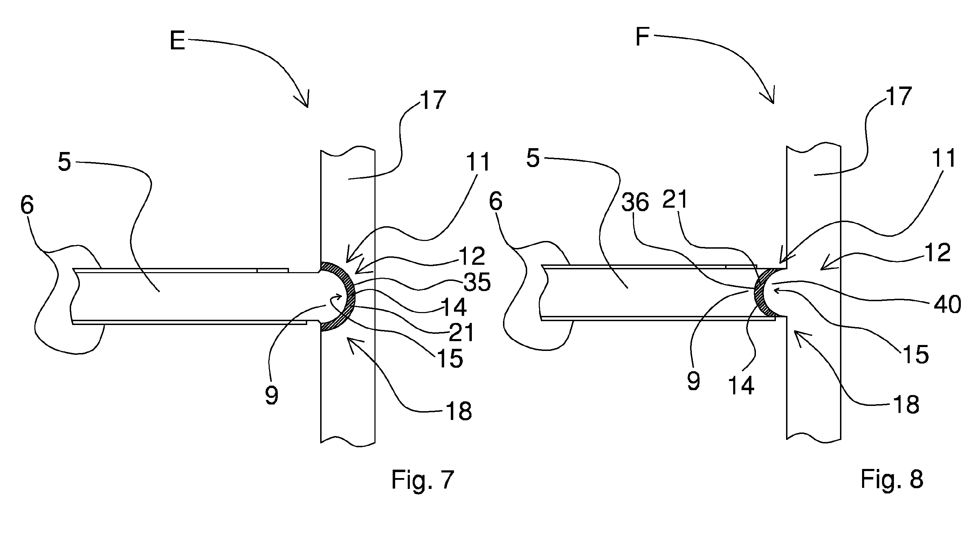

In Figure 7 there is shown a fifth embodiment E of the welding joint means 11 in which the concavity 15 of the profile 14 is defined by a curvilinear part 21.

In the fifth embodiment E the curvilinear part 21 defines a C-shaped profile contained in the upright 17.

In other words, in the fifth embodiment E the first end portion 9 and the second end portion 10 are C-shaped and are arranged for being inserted into respective fifth seats 35, which are also C-shaped and obtained in the first portions 12 and in the second portions 13.

In Figure 8 there is shown a sixth embodiment F of the welding joint means 11 in which the concavity 15 of the profile 14, defined by a curvilinear part 21, is contained in the crosspiece 5.

In other words, in the sixth embodiment F the first portions 12 and the second portions 13 comprise third C-shaped ridges 40 arranged for being inserted into sixth seats 36, which are also C-shaped and obtained in the first end portion 9 and in the second end portion 10.

In an embodiment of the invention, which is not shown, the concavity 15 is defined by more than one curvilinear part 21.

In a further embodiment of the invention, which is not shown, the concavity 15 is defined by one or more rectilinear parts 16 and by one or more curvilinear parts 21.

In a still further embodiment of the invention, which is not shown, wheel means is provided that is associated with the first pair of uprights 7 and with the second pair of uprights 8 to insert the supporting structure 1 into or remove the supporting structure 1 from the space 3.

In other words, the supporting structure 1 can be fixed inside or be extractable from, the space 3.

It should be noted that the welding zones 18 are substantially flat and are devoid of interstices.

This enables supporting structures 1 to be obtained that are easy to clean.

Further, it should be noted that the first end portions 9 and the second end portions 10 are self-centring respectively in the first portions 12 and in the second portions 13.

This, in addition to the possibility of performing automated laser head welding, makes assembling the supporting structure 1 easier and fast.

Still, as the profile 14 of the welding joint means 11 is contained in the upright 17 or in the crosspiece 5 it is possible to increase the resistance of the supporting structure 1 to both thermal and mechanical stress compared with known structures.

## Claims

1. Supporting structure (1) for supporting receptacles (2) for foods in apparatuses (4) for thermally treating said foods, comprising crosspiece means (5) such as to act as a guide for said receptacles (2), upright means (7, 8) for supporting said crosspiece means (5) and welding joint means (11) for fixing an end portion (9, 10) of said crosspiece means (5) to a further portion (12, 13) of said upright means (7, 8), **characterised in that** said end portion (9, 10) and said further portion (12, 13) are substantially coplanar and said welding joint means (11) extends along a profile (14) having at least a concavity (15).

2. Structure according to claim 1, wherein said at least a concavity (15) is defined by substantially rectilinear parts (16; 17).

3. Structure according to claim 2, wherein said substantially rectilinear parts (16; 17) define a V-shaped profile.

4. Structure according to claim 3, wherein said V-shaped profile comprises a vertex angle (α) greater than or equal to 20°.

5. Structure according to claim 3, wherein said V-shaped profile comprises a vertex angle (α) less than 90°.

6. Structure according to claim 3, wherein said V-shaped profile comprises a vertex angle (α) substantially equal to 90°.

7. Structure according to claim 2, wherein said substantially rectilinear parts (16; 17) define a C-shaped profile.

8. Structure according to claim 1, wherein said at least a concavity (15) is defined by at least one curvilinear part (21).

9. Structure according to any preceding claim, wherein said profile (14) is contained in said upright means (7, 8) .

10. Structure according to any one of claims 1 to 8, wherein said profile (14) is contained in said crosspiece means (5).

11. Structure according to any preceding claim, and comprising wheel means associated with said upright means (7, 8) for moving said supporting structure (1).
